Europäisches Patentamt

European Patent Office

Office européen des brevets

(19)

(11) Publication number: **0 057 043**
**B1**

# (12) EUROPEAN PATENT SPECIFICATION

(45) Date of publication of patent specification: **04.07.84**

(51) Int. Cl.³: **F 16 L 41/08, F 16 L 41/06**

(21) Application number: **82200092.3**

(22) Date of filing: **26.01.82**

(54) **A sealing ring for use in a branch pipe or drilling saddle and branch pipe saddle provided with said sealing ring.**

(30) Priority: **26.01.81 NL 8100358**

(43) Date of publication of application:
**04.08.82 Bulletin 82/31**

(45) Publication of the grant of the patent:
**04.07.84 Bulletin 84/27**

(84) Designated Contracting States:
**AT BE CH DE FR GB IT LI LU NL SE**

(56) References cited:
**FR - A - 1 263 523**
**FR - A - 2 078 634**
**GB - A - 1 234 017**
**GB - A - 1 545 857**
**US - A - 3 807 435**
**US - A - 3 840 255**
**US - A - 4 157 195**

(73) Proprietor: **WAVIN B.V.**
**Händellaan 251**
**NL-8031 EM Zwolle (NL)**

(72) Inventor: **Offringa, Oege René**
**19 Singelberg**
**NL-7772 DA Hardenberg (NL)**

(74) Representative: **van der Veken, Johannes Adriaan et al,**
**EXTERPATENT Willem Witsenplein 4**
**NL-2596 BK 's-Gravenhage (NL)**

Courier Press, Leamington Spa, England.

# Description

The invention relates to a sealing ring for use in a branch pipe or drilling saddle, said sealing ring comprising a base profile to engage the bottom of a packing groove in said saddle, and an operational profile, to engage the outer wall of a pipe.

A branch pipe saddle, or a drilling saddle, is known in the art, e.g. GB—A—1234017, and consists of a semi-cylindrical part, the size of which is adapted to the diameter of a pipe to be provided with a branch line. Said known saddle comprises a pipe portion or branch in which a branch pipe is installed. In actual practice, generally one and the same branch is used for pipes having differing diameters, whilst only the internal diameter of the semi-cylindrical part will vary in order to appropriately fasten a saddle upon a pipe having a given diameter. The sealing of the saddle is effected by providing the surface of the saddle which adjoins the pipe with a packing groove surrounding the opening in the branch, into which groove a sealing ring or sleeve engages.

The pressure exerted by the sealing ring upon the pipe should then be as light as possible, as the respective bore or drilling has weakened the pipe wall at the branch so that, in case of a low internal fluid pressure prevailing, the pipe wall will be pressed inwardly by said sealing ring.

With a view to the latter, sealing problems may occur in the course of time, even to such an extent that the sealing ring or sleeve will get pressed between the gap occurring between the pipe and the respective saddle.

Notwithstanding that the predetermined projectional diameter of the packing groove is the same in the branch pipe saddle for differing pipe diameters, additional deviations may occur as a result of the differing pipe diameters, and may either cause the risk of an insufficient engagement of the sealing ring into the packing groove or the falling out of said ring from said groove.

The present invention aims to alleviate said disadvantages.

According to the invention this is attained with a sealing ring, which is characterized in that portions of the side walls of the sealing ring slope outwardly away from the base profile of said sealing ring, the cross-sectional width of the sealing ring at its base profile, being smaller than the width at a distance from said base profile, the greatest cross-sectional width portion of the sealing ring being sized to contact the sides of the packing groove when the seal is located in the groove.

The greatest width of the cross-section of the sealing ring may exceed the width of the packing groove, the width of the sealing ring at the base face profile thereof, being smaller than the width of the packing groove.

The slopingly extending side wall portions of the sealing ring may end in pointed edges, so that the sealing ring may be easily installed in the groove and cannot fall out of said groove.

The invention thus provides a sealing ring, such that adhering of the sealing ring in the packing groove, has become superfluous.

The present invention will be illustrated with the aid of the accompanying drawings, wherein:

Fig. 1 is a cross-section through a pipe, also illustrating part of a branch pipe saddle or drilling saddle, provided with a sealing ring, and mounted thereupon;

Fig. 2 is a cross-section through a known embodiment of a sealing ring for use with a branch pipe saddle or drilling saddle;

Fig. 3 is a similar cross-section through another known sealing ring;

Fig. 4 is a cross-section through a sealing ring similar to that of Fig. 2, but embodied in accordance with the present invention;

Fig. 4a is an alternative embodiment of the cross-section of Fig. 4;

Fig. 5 is a cross-section through a sealing ring similar to that of Fig. 3, but embodied in accordance with the present invention; and

Figs. 6, 7 and 8 are cross-sections of a sealing ring in accordance with the invention, provided in a packing groove of a branch pip saddle or drilling saddle but in positions dependent upon three different pipe diameters, for which said sealing ring can be used.

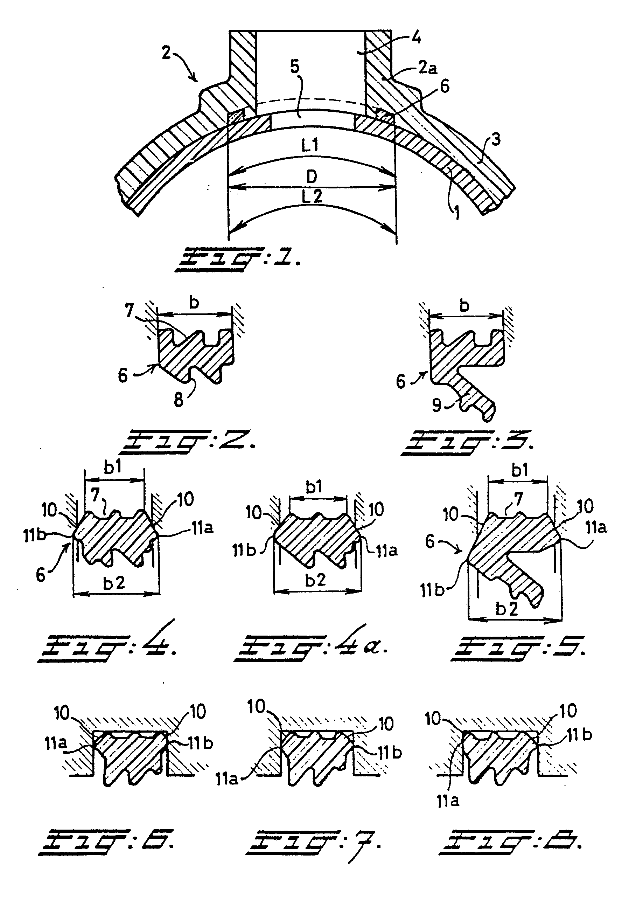

Fig. 1 shows a cross-sectional view of a branch pipe saddle or drilling saddle 2 comprising a branch 2a and mounted in a conventional manner upon a pipe 1 by means of a semi-cylindrical part 3 being integral with said branch 2a. The cavity 4 of the branch 2a coincides with an opening 5 accurately drilled into pipe 1 by means of said saddle 2. The part 3 is fastened upon the pipe 1 by means of a further semi-cylindrical part, while adding a sealing ring 6 engaging into a packing groove in the branch pipe or drilling saddle.

In order to keep the production expenditures for branch pipe or drilling saddles as low as posible, one and the same model is generally used for pipes having differing diameters, so that only the internal diameter of part 3 has to be adapted to the diameter of the pipe to be used.

Figs. 2 and 3 show a cross-section of known sealing rings. The rings of Fig. 2 are preferably used in saddles destined for pipes having smaller diameters, while the type of sealing rings as illustrated in Fig. 3 are preferably used in saddles to be mounted upon pipes having a greater diameter. The ring of Fig. 3 can actually only be disposed with difficulty in the form of a short arc, since its resilient collar 9 will then start to take an upright position. Although the sealing ring of Fig. 2 exerts a pressure upon the outer wall of pipe 1 around the opening 5 greater than the pressure exerted by the sealing ring in Fig. 3, the smaller pipe diameters cause the pipe to be relatively more rigid than the pipe of Fig. 3 so that any risk of a deformation of the said pipe is obviated to a greater extent.

Although in both embodiments the width b of the cross-section of the sealing ring 6 corresponds to the width b of the packing groove in the branch pipe or drilling saddle 2, difficulties may arise in relation to the diameter of the pipe 1 to be provided with a branch pipe or drilling saddle 2 (Fig. 1). Although the projectional diameter D is proposed to correspond to that of three various pipes, the lengths of arc of which vary for differing pipe thicknesses, so that, for instance, the length of arc $L_1$ of a pipe having a greater diameter, is shorter than the length of arc $L_2$ of a pipe having a smaller diameter. From the latter it follows, that the average diameter of a sealing ring 6 adapted to the average diameter of a pipe 1 will either be too great for a pipe having a greater diameter or too small for a pipe having a smaller diameter. Additionally installing the sealing ring of Figs. 2 and 3 in a packing groove will often tend to cause problems.

In Figs. 4, 4a and 5, the sealing rings according to the invention are therefore so embodied, that portions 10 of the side walls of the sealing ring slopingly extend with respect to the base profile 7, the width $b_1$ of the sealing ring 6 at said end face profile 7, being smaller than the width $b_2$ at a distance from said base profile 7. The greatest width $b_2$ of the sealing ring 6 is greater than the width b of the packing groove while the width $b_1$ of the sealing ring at the base profile 7 is smaller than the width b of the said packing groove. The region having the greatest width has inner and outer edges 11a, 11b respectively, situated at the innermost, outermost surface respectively of the sealing ring 6. Said inner and outer edges 11a, 11b preferably have the shape of an acute edge.

As can be seen in Figs. 6, 7 and 8 the presence of the pointing edges, cause the sealing ring according to the invention to be easily and sealingly installed in the packing groove for pipes having different diameters. The sealing ring of Fig. 6 is too large for the projectional diameter D of the packing groove. The edge 11a engages the side wall of the packing groove while the edge 11b is compressed. In this case the pipe has a large diameter.

In Fig. 7, the edges 11a and 11b optimally engage the side walls of the packing groove; in this case a pipe 1 has an average diameter. In Fig. 8 the sealing ring according to the invention is used for a pipe 1 having a small diameter so that said ring is actually too small. In this case, however, the inner edge 11a is compressed whereas the outer edge 11b still engages the side wall of the packing groove, so that clamping is obtained. The base profile and the operational profile provide the required sealing.

## Claims

1. A sealing ring for use in a branch pipe or drilling saddle, said sealing ring comprising a base profile (7) to engage the bottom of a packing groove in said saddle and an operational profile to engage the outer wall of a pipe, characterized in that portions (10) of the side walls of the sealing ring (6) slope outwardly away from the base profile (7), the cross-sectional width ($b_1$) of the sealing ring at its base profile (7), being smaller than the width ($b_2$) at a distance from said base profile, the greatest cross-sectional width portion of the sealing ring being sized to contact the sides of the packing groove when the seal is located in the groove.

2. A sealing ring as claimed in claim 1, with a branch pipe or drilling saddle comprising a packing groove, characterized in that the greatest width ($b_2$) of the cross-section of the sealing ring (6) is greater than the width (b) of the packing groove.

3. A sealing ring with a branch pipe or drilling saddle as claimed in claim 2, characterized in that the width ($b_1$) of the sealing ring (6) at the base profile (7) thereof, is smaller than the width (b) of the packing groove.

4. A sealing ring as claimed in claim 1, characterized in that the slopingly extending side wall portions (10) of the sealing ring (6) end in pointed edges (11a, 11b).

5. A sealing ring as claimed in any one or more of claims 1—4, characterized in that the region of the sealing ring (6) having the greatest width ($b_2$) constitutes an inner and outer edge (11a, 11b) at the innermost, outermost surface respectively, of the sealing ring.

6. A sealing ring as claimed in claim 5, characterized in that said inner and outer edges (11a, 11b) are preferably acute edges.

7. A branch pipe or drilling saddle comprising a packing groove, characterized in that said groove is provided with a sealing ring (6) as claimed in any one or more of claims 1 to 6.

## Patentansprüche

1. Dichtungsring zur Verwendung in einem Zweigrohr- oder Bohrsattel mit einem Basisprofil (7) für einen Eingriff mit dem Boden einer Dichtungsrille in dem Sattel und einem Arbeitsprofil für einen Eingriff mit der Außenwand eines Rohres, dadurch gekennzeichnet, daß Bereiche (10) der Seitenwände des Dichtungsrings (6) schräg vom Basisprofil (7) fort nach außen verlaufen, die Querschnittsbreite ($b_1$) des Dichtungsrings an dessen Basisprofil (7) geringer als die im Abstand zu letzterem vorhandene Breite ($b_2$) ist und der Dichtungsringbereich mit der größten Querschnittsbreite derart bemessen ist, daß er bei in der Rille angeordneter Dichtung die Seiten der Dichtungsrille berührt.

2. Dichtungsring nach Anspruch 1, bei einem Zweigrohr- oder Bohrsattel mit einer Dichtungsrille, dadurch gekennzeichnet, daß die größte Querschnittsbreite ($b_2$) des Dichtungsrings (6) größer als die Breite (b) der Dichtungsrille ist.

3. Dichtungsring bei einem Zweigrohr- oder Bohrsattel nach Anspruch 2, dadurch gekennzeichnet, daß die Breite ($b_1$) des Dichtungsrings (6) an dessen Basisprofil (7) geringer als die Breite (b) der Dichtungsrille ist.

4. Dichtungsring nach Anspruch 1, dadurch gekennzeichnet, daß die schräg verlaufenden Seitenwandbereiche (10) des Dichtungsrings (6) in spitze Kanten (11a, 11b) auslaufen.

5. Dichtungsring nach einem oder mehreren der Ansprüche 1 bis 4, dadurch gekennzeichnet, daß der die größte Breite ($b_2$) aufweisende Bereich des Dichtungsrings (6) eine Innen- und eine Außenkante (11a, 11b) an der innersten bzw. äußersten Fläche des Dichtungsrings bildet.

6. Dichtungsring nach Anspruch 5, dadurch gekennzeichnet, daß die Innen- und die Außenkante (11a, 11b) vorzugsweise spitze Kanten sind.

7. Zweigrohr- oder Bohrsattel mit einer Dichtungsrille, dadurch gekennzeichnet, daß die Rille mit einem Dichtungsring (6) nach einem oder mehreren der Ansprüche 1 bis 6 versehen ist.

**Revendications**

1. Bague d'étanchéité à utiliser dans un tuyau de branchement ou une selle de forage, ladite bague d'étanchéité présentant un profil de base (7) destiné à entrer en contact avec le fond d'une rainure de presse-étoupe dans ladite selle et un profil opérationnel destiné à entrer en contact avec la paroi extérieure d'un tuyau, caractérisée en ce que des portions (10) des parois latérales de la bague d'étanchéité (6) s'inclinent vers l'extérieur en s'éloignant du profil de base (7), la largeur en section transversale (b1) de la bague d'étanchéité au niveau de son profil de base (7), étant inférieure à la largeur (b2) à une certaine distance dudit profil de base, la portion de la bague d'étanchéité ayant la plus grande largeur en coupe transversale étant dimensionnée pour entrer en contact avec les flancs de la rainure de presse-étoupe lorsque le joint étanche est disposé dans la rainure.

2. Bague d'étanchéité selon la revendication 1 comprenant un tuyau de branchement ou selle de forage comprenant une rainure de presse-étoupe, caractérisée en ce que la plus grande largeur (b2) de la section transversale de la bague d'étanchéité (6) est supérieure à la largeur (b) de la rainure de presse-étoupe.

3. Bague d'étanchéité comprenant un tuyau de branchement ou selle de forage selon la revendication 2, caractérisée en ce que la largeur (b1) de la bague d'étanchéité (6) au niveau du profil de base (7) de celle-ci est inférieure à la largeur (b) de la rainure de presse-étoupe.

4. Bague d'étanchéite selon la revendication 1, caractérisée en ce que les portions (10) des parois latérales inclinées de la bague d'étanchéité (6) se terminent en arête pointue (11a, 11b).

5. Bague d'étanchéité selon l'une quelconque ou plusieurs des revendications 1 à 4, caractérisée en ce que la région de la bague d'étanchéité (6) présentant la plus grande largeur (b2) constitue une arête intérieure et extérieure (11a, 11b) au niveau de la surface intérieure, extérieure, respectivement, de la bague d'étanchéité.

6. Bague d'étanchéité selon la revendication 5, caractérisée en ce que lesdites arêtes intérieure et extérieure (11a, 11b) sont de préférence des arêtes aigües.

7. Tuyau de branchement ou selle de forage comprenant une rainure de presse-étoupe, caractérisé en ce que la rainure est pourvue d'une bague d'étanchéité (6) selon l'une quelconque ou plusieurs des revendications 1 à 6.

Fig:1.

Fig:2.

Fig:3.

Fig:4.

Fig:4a.

Fig:5.

Fig:6.

Fig:7.

Fig:8.